# EUROPÄISCHE PATENTSCHRIFT

(11) **EP 0 637 425 B1**
(45) Veröffentlichungstag und Bekanntmachung des Hinweises auf die Patenterteilung: **13.01.1999**
(21) Anmeldenummer: 94111944.8
(22) Anmeldetag: 30.07.1994
(51) Int. Cl.: A47C 20/04, A47C 20/12

(54) **Verstelleinrichtung für die Kopfstütze eines Bettrahmens**
An adjusting device for the head-rest of a bed
Dispositif de réglage d'un support de tête d'un lit

(30) Priorität: 02.08.1993 DE 9311520 U
(43) Veröffentlichungstag der Anmeldung: 08.02.1995
(73) Patentinhaber: Hartmann, Siegbert, D-32584 Löhne (DE)
(72) Erfinder: Hartmann, Siegbert, D-32584 Löhne (DE)
(74) Vertreter: Hentzschel, Hans-Jürgen, Dipl.-Ing.

(56) Entgegenhaltungen:
- DE-A- 3 922 727
- DE-U- 8 716 951
- DE-U- 8 911 656

## Beschreibung

Die Erfindung betrifft eine Verstelleinrichtung für die Kopfstütze eines Bettrahmens, die schwenkbar an einem gleichfalls schwenkbaren Rückenteil gelagert und mit einem das Rückenteil bewegenden, längsverschiebbar im Bettrahmen geführten aufrecht stehenden Hubmittel für sich getrennt anhebbar ist(siche DE-U-8 716 951).

Bei einer älteren Konstruktion dieser Art ist es bekannt, daß zuerst die Kopfstütze und dann mit ihr zusammen das Rückenteil nach oben geschwenkt wird, was jedoch den von einem so gestalteten Bettrahmen erwarteten Funktionseigenschaften widerspricht. Deshalb hat sich die Erfindung das Ziel gesetzt, eine Anordnung zu schaffen, mit der das Hochstellen der Kopfstütze nicht mehr vor dem Anheben des Rückenteiles sondern danach erfolgt und sich insofern ein für deren Benutzung gewünschter, weitaus zweckmäßigerer Bewegungsablauf ergibt.

Zur Lösung der gestellten Aufgabe schlägt die Erfindung eine dadurch gekennzeichnete Einrichtung vor, daß die lageveränderliche Abstützung des Rückenteiles auf dem Hubmittel über eine an seiner Unterseite befindliche, zur Kopfstütze hin nach unten abfallende schiefe Ebene erfolgt, der ein auf die Kopfstütze einwirkender keilförmiger Schieber zugeordnet ist, der eine dem Hubmittel zugewandte, im wesentlichen parallel zur schiefen Ebene des Rückenteiles verlaufende Stützfläche aufweist, die im abgesenkten Zustand der Kopfstütze über die schiefe Ebene hinaussteht und vom Hubmittel erst nach einer vorbestimmten Schwenkbewegung des Rückenteiles zum Anheben der Kopfstütze gegenüber dem Rückenteil erfaßt wird. Hierbei kann vorteilhafterweise der auf die Kopfstütze einwirkende keilförmige Schieber in Längsrichtung des Bettrahmens beweglich am Rückenteil geführt sein und gegen ein unterseitig an der Kopfstütze angebrachtes Gegenlager drücken.

Als zusätzliche Maßnahme, mit der im Hinblick auf die unterhalb von Bettrahmen herrschenden beengten Platzverhältnisse eine gegenüber den bisher verwendeten Hubzylindern oder Spindelantrieben erheblich verringerte Bauhöhe möglich wird, soll als gemeinsames Hubmittel für die Kopfstütze und das Rückenteil eine aus aneinandergereihten Einzelsegmenten bestehende, von einem zur schiefen Ebene des Rückenteiles bzw. zu dem die Kopfstütze bewegenden keilförmigen Schieber hin ausmündenden, anderenends in einen waagerechten Abschnitt übergehenden Führungskanal längsverschiebbar aufgenommene Gliederkette dienen, deren in der Bewegungsebene des Rückenteiles sowie der Kopfstütze gelenkig miteinander verbundenen Einzelsegmente außerhalb des Führungskanals infolge gegenseitiger Verriegelung ein freistehendes Stützorgan bilden, während sie sich innerhalb des Führungskanals unter Aufhebung ihrer Verriegelung dessen teilweise gekrümmtem Verlauf anpassen können. Besonders günstige Bedienungseigenschaften dieser Hubvorrichtung lassen sich darüber hinaus erreichen, wenn zum Bewegen der längsverschiebbaren Gliederkette ein motorisch oder von Hand angetriebenes, in eine Querverzahnung der Einzelsegmente eingreifendes Zahnrad vorgesehen ist.

Ein Ausführungsbeispiel des Anmeldungsgegenstandes wird nachfolgend anhand der Zeichnungen beschrieben. Darin zeigen im einzelnen:
- Fig. 1: die teilweise Seitenansicht eines mit der erfindungsgemäßen Verstelleinrichtung ausgestatteten Bettrahmens, dessen anhebbares Rückenteil und eine schwenkbar daran gelagerte Kopfstütze im abgesenkten Zustand dargestellt sind,
- Fig. 2: die Seitenansicht der Fig. 1 mit angehobenem Rükkenteil, aber noch nicht verschwenkter Kopfstütze, und
- Fig. 3: dieselbe Seitenansicht, in der sowohl das angehobene Rückenteil als auch die aufgerichtete Kopfstütze ihre jeweiligen Endstellungen erreicht haben.

Wie aus den Abbildungen hervorgeht, ist an dem Bettrahmen 1 ein Rückenteil 2 um den Drehpunkt 3 schwenkbar gelagert. An seinem freien Ende trägt dieses Rückenteil 2 eine über ein Gelenk 4 mit ihm verbundene Kopfstütze 5, die für sich getrennt schwenkbar ist. Dabei sollen die beiden Teile 2 und 5 nach der Erfindung von einem gemeinsamen, im Bettrahmen 1 angeordneten Hubmittel bewegt werden, wofür im vorliegenden Falle eine Gliederkette 6 Verwendung findet.

Die Gliederkette 6 besteht aus aneinandergereihten Einzelsegmenten 7 und wird von einem zum Rückenteil 2 hin ausmündenden, anderenends in einen waagerechten Abschnitt übergehenden, teilweise von Rollen 8 und 9 gebildeten Führungskanal 10 längsverschiebbar aufgenommen. Ihre durch Bolzen 11 in der Bewegungsebene des Rückenteiles 2 sowie der Kopfstütze 5 gelenkig miteinander verbundenen Einzelsegmente 7 sind so ausgebildet, daß sie außerhalb des Führungskanals 10 infolge gegenseitiger Verriegelung zu einem freistehenden Stützorgan für das Rückenteil 2 werden, während sie sich innerhalb des Führungskanals 10 unter Aufhebung ihrer Verriegelung dessen Verlauf anpassen können.

Durch die Gliederkette 6 muß in der Bewegungsrichtung nicht mehr wie bei starren Hubmitteln Platz für deren ganze Länge unter dem Bettrahmen 1 vorhanden sein, sondern aufgrund ihrer Umlenkbarkeit läßt sich mit weitaus weniger Bauhöhe auskommen. Das gilt auch für den Antrieb der Gliederkette 6, der mittels eines motorisch oder von Hand betätigten Zahnrades 12 erfolgt, das in eine Querverzahnung der Einzelsegmente 7 eingreift.

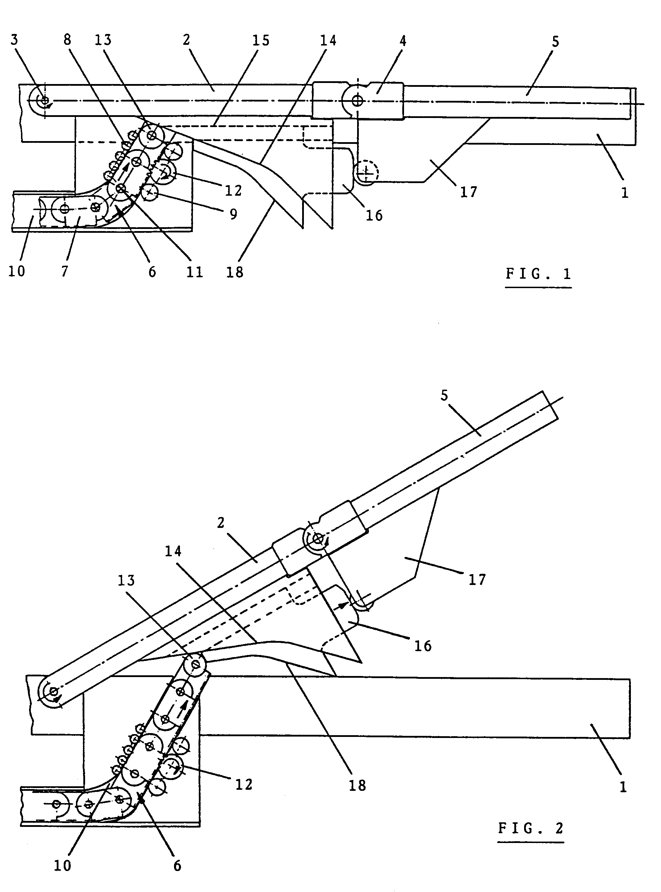

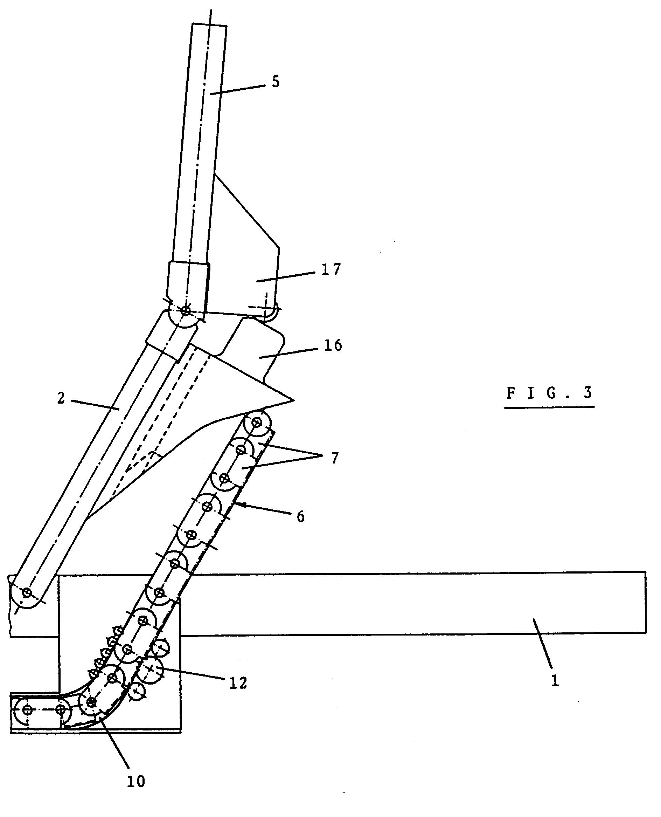

Zur lageveränderlichen Abstützung des Rückenteiles 2 auf dem mit einer Stützrolle 13 ausgestatteten Ende der Gliederkette 6 dient eine an der Unterseite des Rückenteiles 2 befindliche, zur Kopfstütze 5 hin abfallende schiefe Ebene 14. Ihr ist ein in Längsrichtung des Bettrahmens 1 in einer Führungsnut 15 beweglicher keilförmiger Schieber 16 zugeordnet, der seinerseits gegen ein unterseitig an der Kopfstütze 5 angebrachtes Gegenlager 17 drückt. Zur Stützrolle 13 der Gliederkette 6 hin weist er eine parallel zur schiefen Ebene 14 des Rückenteiles 2 verlaufende Stützfläche 18 auf, die in den aus Fig. 1 und 2 ersichtlichen Stellungen der Kopfstütze 5 über die schiefe Ebene 14 hinaussteht.

Den von der Gliederkette 6 als Hubmittel für das Rückenteil 2 sowie die Kopfstütze 5 bewirkten Bewegungsablauf machen die Fig. 2 und 3 deutlich, während Fig. 1 beide noch im abgesenkten und die Gliederkette 6 im eingezogenen Zustand wiedergibt. Wird nun die Gliederkette 6 gemäß Fig. 2 mit Hilfe des Zahnrades 12 aus dem Führungskanal 10 hinausgeschoben, so bewegt sich ihre Stützrolle 13 zunächst nur auf der schiefen Ebene 14 vorwärts und hebt das Rückenteil 2 und die vorerst noch mit ihm fluchtende Kopfstütze 5 gemeinsam an. Erst bei weitergehendem Ausfahren der Gliederkette 6 erfaßt sie auch die Stützfläche 18 des Schiebers 16, woraufhin dieser dann über das Gegenlager 17 die Kopfstütze 5 dem Rückenteil 2 voreilend nach oben drückt, bis schließlich beide die in Fig. 3 abgebildete Endstellung einnehmen. Damit erfüllt der Anmeldungsgegenstand alle Komfortbedingungen eines über ein schwenkbares Rückenteil und eine schwenkbare Kopfstütze verfügenden Bettrahmens, wie es der Aufgabe der Erfindung entspricht.

## Patentansprüche

1. Verstelleinrichtung für die Kopfstütze eines Bettrahmens, die schwenkbar an einem gleichfalls schwenkbaren Rückenteil gelagert und mit einem das Rückenteil bewegenden, längsverschiebbar im Bettrahmen geführten aufrecht stehenden Hubmittel für sich getrennt anhebbar ist,
dadurch gekennzeichnet, daß die lageveränderliche Abstützung des Rückenteiles (2) auf dem Hubmittel (6) über eine an seiner Unterseite befindliche, zur Kopfstütze (5) hin nach unten abfallende schiefe Ebene (14) erfolgt, der ein auf die Kopfstütze (5) einwirkender keilförmiger Schieber (16) zugeordnet ist, der eine dem Hubmittel (6) zugewandte, im wesentlichen parallel zur schiefen Ebene (14) des Rückenteiles (2) verlaufende Stützfläche (18) aufweist, die im abgesenkten Zustand der Kopfstütze (5) über die schiefe Ebene (14) hinaussteht und vom Hubmittel (6) erst nach einer vorbestimmten Schwenkbewegung des Rückenteiles (2) zum Anheben der Kopfstütze (5) gegenüber dem Rückenteil (2) erfaßt wird.

2. Verstelleinrichtung nach Anspruch 1, dadurch gekennzeichnet, daß der auf die Kopfstütze (5) einwirkende keilförmige Schieber (16) in Längsrichtung des Bettrahmens (1) beweglich am Rückenteil (2) geführt ist und gegen ein unterseitig an der Kopfstütze (5) angebrachtes Gegenlager (17) drückt.

3. Verstelleinrichtung nach Anspruch 1 oder 2, dadurch gekennzeichnet, daß als gemeinsames Hubmittel für die Kopfstütze (5) und das Rückenteil (2) eine aus aneinandergereihten Einzelsegmenten (7) bestehende, von einem zur schiefen Ebene (14) des Rückenteiles (2) bzw. zu dem die Kopfstütze (5) bewegenden keilförmigen Schieber (16) hin ausmündenden, anderenends in einen waagerechten Abschnitt übergehenden Führungskanal (10) längsverschiebbar aufgenommene Gliederkette (6) dient, deren in der Bewegungsebene des Rückenteiles (2) sowie der Kopfstütze (5) gelenkig miteinander verbundenen Einzelsegmente (7) außerhalb des Führungskanals (10) infolge gegenseitiger Verriegelung ein freistehendes Stützorgan bilden, während sie sich innerhalb des Führungskanals (10) unter Aufhebung ihrer Verriegelung dessen teilweise gekrümmtem Verlauf anpassen können.

4. Verstelleinrichtung nach Anspruch 3, dadurch gekennzeichnet, daß zum Bewegen der längsverschiebbaren Gliederkette (6) ein motorisch oder von Hand angetriebenes, in eine Querverzahnung der Einzelsegmente (7) eingreifendes Zahnrad (12) vorgesehen ist.

## Claims

1. Adjusting device for the head-rest of a bed, which is supported in a pivoting manner on a back-rest section, which can also be pivoted, and can be raised separately by means of an upright lifting facility which moves the back-rest section and can be guided along the length of the bed frame,
characterised in that variable-position support of the back-rest section (2) on the lifting means (6) is provided by an inclined plane (14) on its lower side which slopes down to the headrest (5), the plane being assigned a wedge-shaped slider (16) which acts on the headrest (5) and has a support surface (18) which faces the lifting means (6) and is essentially parallel to the inclined plane (14) of the back-rest section (2), the support surface, when the headrest (5) is in the lowered position, standing out above the inclined plane (14) and only being caught by the lifting means (6) after a predetermined pivoting movement of the back-rest section (2) for raising the headrest (5) relative to the back-rest section (2).

2. Adjusting device according to Claim 1, characterised in that the wedge-shaped slider (16) which acts on the headrest (5) is guided in such a manner that it can be moved along the back-rest section (2) in the longitudinal direction of the bed (1) and presses against an end support (17) fitted to the underside of the headrest (5).

3. Adjusting device according to Claim 1 or 2, characterised in that a chain of elements (6) acts as common lifting means for the headrest (5) and the back-rest section (2), the chain consisting of adjacent rows of individual segments (7) and being contained, in such a manner that it can be moved longitudinally, in a guide duct (10) leading to the inclined plane (14) of the back-rest section (2) or the wedge-shaped slider (16) which moves the headrest (5) and at the other end ending in a horizontal section, the individual segments (7) being connected in an articulated manner in the plane of movement of the back-rest section (2) and of the headrest (5) so that they form a free-standing support body outside the guide duct (10) as a result of mutual interlocking, while being able to adjust inside the guide duct (10) to its partially curved course by cancelling their interlocking.

4. Adjusting device according to Claim 3, characterised in that a motorised or manually driven cogwheel (12), which engages with a cross-gearing of the individual segments (7), is provided for the movement of the longitudinally movable chain of elements (6).

## Revendications

1. Dispositif d'ajustage d'un support de tête d'un châssis de lit, ledit support de tête étant articulé de façon à pouvoir pivoter à un élément dossier pouvant également pivoter et pouvant être levé séparément au moyen d'un moyen de levage disposé de façon verticale, guidé dans le châssis de lit de façon à pouvoir être déplacé en direction longitudinale et mouvant l'élément dossier, caractérisé en ce que l'appui variable de l'élément dossier (2) sur le moyen de levage (6) est réalisé au moyen d'un plan incliné (14) se trouvant du côté inférieur du moyen de levage et qui, en direction du support de tête (5), est incliné vers le bas, une coulisse (16) en forme de coin agissant sur le support de tête (5) étant associée audit plan incliné, ladite coulisse ayant une surface de support (18) faisant face au moyen de levage (6) et s'étendant substantiellement parallèlement au plan incliné (14) de l'élément dossier (2), ladite surface d'appui dépassant le plan incliné (14) dans l'état abaissé du support de tête (5) et étant seulement emmenée par le moyen de levage (6) après un mouvement pivotant prédéterminé de l'élément dossier (2) pour lever le support de tête (5).

2. Dispositif d'ajustage selon la revendication 1, caractérisé en ce que la coulisse (16) agissant sur le support de tête (5) est guidée de façon mobile par l'élément dossier (2) en direction longitudinale du châssis de lit et est pressée contre une butée (17) fixée à la surface inférieure du support de tête (5).

3. Dispositif d'ajustage selon la revendication 1 ou 2, caractérisé en ce qu'une chaîne à maillons (6), formée de segments individuels (7) placés l'un contre l'autre, est utilisée comme moyen de support commun pour le support de tête (5) et l'élément dossier (2), la chaîne à maillons étant reçue de façon mobile en direction longitudinale par un canal de guidage (10) dégorgeant vers le plan incliné (14) de l'élément dossier (2) ou vers la coulisse (16) en forme de coin déplaçant le support de tête (5), respectivement, et passant à l'autre extrémité dans un segment horizontal, les segments individuels (7) de la chaîne articulés l'un à l'autre dans le plan de mouvement de l'élément dossier (2), ainsi que du support de tête (5), formant à l'extérieur du canal de guidage (10) un élément d'appui sur pied suite à leur verrouillage mutuel, tandis qu'à l'intérieur du canal de guidage (10) ils peuvent s'adapter à la forme partiellement courbée dû à la neutralisation de leur verrouillage mutuel.

4. Dispositif d'ajustage selon la revendication 3, caractérisé en ce que pour le déplacement en direction longitudinale de la chaîne à maillons (6) une roue dentée (12) entraînée par un moteur ou à la main est prévue, qui s'engage dans une denture transversale des segments individuels.
